# EUROPEAN PATENT APPLICATION

(11) **EP 1 535 673 A2**
(43) Date of publication of application: **01.06.2005**
(21) Application number: 04425597.4
(22) Date of filing: 03.08.2004
(51) Int. Cl.: B09B 3/00

(54) **System and method for the decomposition of organic substances, particulary carcasses and/or animal waste**

(30) Priority: 06.11.2003 IT BS20030112
(71) Applicant: Tagini, Giancarlo, 25015 Desenzano del Garda (Brescia) (IT)
(72) Inventor: Tagini, Giancarlo, 25015 Desenzano del Garda (Brescia) (IT)
(74) Representative: Crippa, Paolo Ernesto

(57) **Abstract**

A system for the biodegradation of waste of organic origin, animal carcasses and similar, comprising a recipient (1) to contain the organic substances, an electrical resistor to apply heat and a means (22, 24) to mix the recipient contents with a reaction mass comprising non-pathogenic bacteria, enzymes and a culture for the bacteria, to facilitate this decomposition process. The decomposition product is mainly water vapour which freely disperses to atmosphere through a vapour outlet duct (20).

## Description

This invention consists of a system and method for the biological decomposition, or biodegradation, of organic substances, particularly aimed at the biodegradation of substances of animal origin.

The present invention refers specifically to a biodegradation system intended for use for the decomposition of animal waste and/or carcasses.

Various devices are known in this sector for the decomposition of organic substances, consisting of a tub with concrete walls built in the ground.

These devices have clear disadvantages, due to the infiltration of organic decomposition products into the surrounding land, caused by the inevitable formation of fissures in the tub's walls.

Further known constructions provide a tub, to be inserted in the ground, which is supplied with devices consenting the action of aerobic or anaerobic bacteria.

For example, if organic decomposition occurs in the presence of aerobic bacteria, the tub has an air inlet device, while if decomposition is in the presence of anaerobic bacteria, the tub includes an air suction device.

Constructions as reported above are described, for example, in publication ES-1051709.

These constructions too have disadvantages for the user. Among others, the use of known organic decomposition systems and methods produces notable quantities of decomposition residues.

In addition, said residues must generally be treated as waste to be disposed of.

There thus exists the need for a system for decomposition of organic substances which permits a drastic reduction, if not even a substantial elimination, of decomposition residues.

The problem at the base of this invention is overcome by the system according to claim 1. The claims depending from this describe alternative embodiments. The problem is further overcome by a method according to claim 25. The claims depending from this describe operating variants.

The characteristics and advantages of the present invention will become evident from the indicative, nonlimiting description reported below, with reference to the following figures, in which:

- figure 1 shows an axonometric view of a tub of the system according to the present invention;

- figure 2 shows a partially sectioned axonometric view of the tub in figure 1;

- figure 3 shows a lateral view of the tub in figure 1;

- figure 4 shows a front view of the tub in figure 1;

- figure 5 shows a top view of the tub in figure 1.

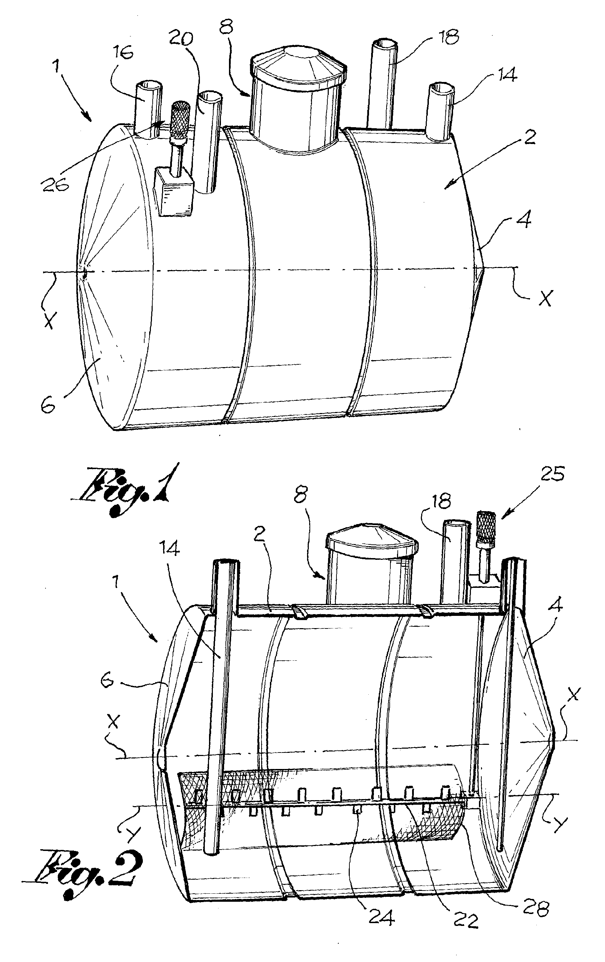

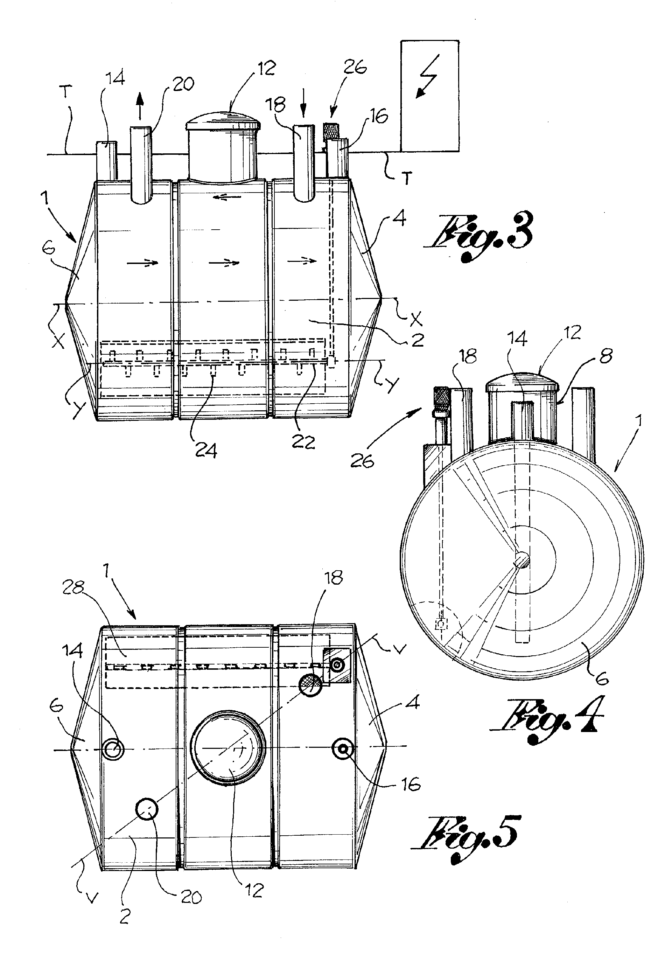

With reference to the attached figures, reference numeral 1 generally indicates a recipient for the decomposition or biodegradation of organic substances.

Specifically, said organic substances comprise waste of animal origin and/or the carcasses of dead animals.

Recipient 1 includes a cylindrical wall 2 which develops along a horizontal axis X-X, closed at its end by a first cover 4 and a second cover 6.

In a preferred embodiment, said covers 4, 6 have a truncated cone shape with axes substantially coinciding with the horizontal axis X-X of lateral wall 2.

Preferably, from lateral wall 2 of the recipient 1 a ring-shaped projection 8, preferably cylindrical, juts out, with an opening which corresponds to the end not interacting with lateral wall 2.

Said opening forms an inlet for organic substances into recipient 1.

The ring-shaped projection 8 is preferably associable with a closure element 12 to close this inlet.

In a preferred embodiment, recipient 1 is constructed of an impermeable, anti-corrosive material, such as stainless steel, glass fibre, reinforced glass fibre, polythene, plasticised steel, resin coating.

The recipient is also suitable to be placed underground.

In other words, the recipient is structurally suitable for burial, i.e. to support the weight of the surrounding earth. The recipient is also electrolytically suitable for burial, i.e. it does not induce electrolytic corrosion phenomena.

This system also includes means to initiate and maintain the decomposition process, able to bring these organic substances to a state suitable for initiation and maintenance of the decomposition process.

Said initiation and maintenance means includes a pre-determined quantity of reaction mass, to be united with the organic substances in order to achieve a fully decomposable compost mass.

For example, the reaction mass comprises a pre-determined quantity of a non-pathogenic bacteria mix. In another embodiment, the reaction mass comprises a pre-determined quantity of one or a mix of enzymes. In still another embodiment, said addition mass comprises a pre-determined quantity of a support culture (defined culture bed) for these bacteria, aimed at their support.

Said reaction mass preferably comprises a predetermined quantity of each of a non-pathogenic bacteria mix, an enzyme or mix of enzymes and a bacteria support culture.

In one embodiment, said reaction mass is added to the organic substances according to a pre-determined dose in relation to the mass of introduced organic substance.

According to an alternative embodiment, the recipient presents at least one feed mouth, distinct from the organic substances inlet, for the introduction of the reaction mass into the recipient.

According to a further alternative embodiment, the recipient interacts with a device for direct feeding of the reaction mass, to achieve a continuous and automatic addition of reaction mass to the recipient.

In a preferred embodiment, said initiation and maintenance means include a heat generator 14 to heat the compost mass.

In a preferred embodiment, said heat generator includes a resistor connected to an electrical supply.

Preferably, these initiation and maintenance means also include a thermostat to detect the mean temperature of the compost mass through at least one temperature measurement probe 16.

Preferably, said measurement probe 16 is placed on the part opposite the heat generator 14.

In other words, in a preferred embodiment, the heat generator 14 is near the end of recipient 1 closed by the first cover 4, while the measurement probe 16 is near the other end of the recipient, near the second cover 6.

A control box is operatively connected to the thermostat and heat generator in order to interrupt the heat supply when the compost mass reaches the reference temperature.

This reference temperature is, for example, between 30 and 50°C, preferably between 35 and 45°C and better still between 37 and 43°C.

In another alternative embodiment, the system includes a means to ventilate the compost mass.

Said ventilation means include, for example, an atmospheric air inlet duct 18 connected to recipient 1, for example in line with its lateral wall 2.

In another embodiment, said ventilation means include an outlet duct 20, connected to recipient 1, to vent its vapours, for example in line with its lateral wall 2.

Said inlet duct 18 and outlet duct 20 are preferably situated at opposite ends of recipient 1.

For example, inlet duct 18 is situated near the recipient's first cover 4, while the outlet duct 20 is situated near the second cover 6.

In another preferred embodiment, said inlet 18 and outlet 20 ducts are placed along an aeration axis V-V, sloped with respect to the horizontal axis X-X of recipient 1.

The system according to the present invention also includes means to mix the organic substances in order to facilitate the decomposition process.

According to a preferred embodiment, the mixing means are mechanical. For example, the mixing means include a shaft 22 positioned in recipient 1 so as to be at least partially submerged in the compost mass in the recipient.

The shaft 22, which has a rotation axis Y-Y, for example substantially parallel to the recipient's horizontal axis X-X, comprises a plurality of stirring blades 24.

Said blades are preferably distributed along the rotation axis Y-Y of shaft 22.

The shaft is operatively connected to a motor 26, for example an electrical motor. Preferably, the shaft 22 is operatively connected to the motor 26 by a motor reducer able to operate the shaft at a pre-determined rotation speed.

In a preferred embodiment, said motor and/or motor reducer are adapted for making the shaft rotate with a speed variable in relation to the mass of introduced organic substance.

The shaft is preferably situated laterally with respect to the recipient inlet, i.e. not in line with it.

According to one embodiment, said shaft 22 equipped with blades 24 is protected by a net 28 to impede the shaft from being damaged by the introduction of organic substances from the recipient's inlet.

Said shaft is operatively connected to the control box which regulates the thermostat according to an operational logic which stops the shaft from rotating when the heat supply from the heat generator 14 is switched off.

In normal installation, recipient 1 is preferably underground, so that it is completely under a ground line T-T.

During normal use of the system described in this invention, the organic substances are introduced into the recipient via the inlet.

Following this, pre-determined quantities of reaction mass and water are added.

The shaft 22 is at least partially submerged in the mass including the reaction mass and water.

The heat generator 14 is turned on, transferring heat to the compost mass.

The mixing means are turned on. For example, the shaft 22 is made to rotate by motor 26.

The mass in the recipient is subjected to constant mixing for as long as the mixing means is turned on.

Specifically, the stirring brings parts of the mass from the bottom of the recipient towards the surface and into contact with atmospheric air, or in any case an environment more oxygen-rich than the bottom of the recipient.

Simultaneously, parts of the mass near or at the surface are taken towards the bottom of the recipient, where they are not in contact with atmospheric air, or in any case where there is less oxygen than at the surface.

In other words, the mixing brings a repeated exposure of portions on the bottom of the container to the air and displaces portions near or at the surface towards the bottom.

In consequence, portions of mass find themselves successively in the presence of oxygen, i.e. an aerobic environment, and in an oxygen-free, or anaerobic environment.

Both the aerobic and anaerobic bacteria are thus subsequently in a condition to react, i.e. in a state able to produce the mass's decomposition.

At the end of the procedure, the entire mass is transformed through the action of the compost mass into water vapour, vented to atmosphere via the ventilation means.

On reaching the pre-determined reference temperature for optimum decomposition, the thermostat detects this temperature and the control box stops the supply of heat by the heat generator.

Preferably, the control box simultaneously stops the mixing means, for example stopping the shaft rotation.

This permits an advantageous energy saving, as continued stirring at this point would more rapidly cool the mass in the recipient.

When a temperature lower than the reference temperature is reached through cooling, the control box, connected to the thermostat, turns on the heat generator and the mixing means.

Unusually, the system according to the present invention consents a notable reduction in decomposition residues.

It also enables aerobic and anaerobic processes to be achieved simultaneously. It is in fact known in this sector that the decomposition process is never solely aerobic or anaerobic.

Advantageously, the system allows the entire mass, including organic substances, reaction mass and water, to be transformed into water vapour, practically without the formation of any residue to be removed from the recipient.

According to another advantageous aspect, the system according to the invention enables a notable energy saving, given the long activation times necessary to transform the entire mass.

A further advantage is the positioning of the heat generator and measurement probe at opposite ends, preferably along the horizontal axis, so that the temperature detected by the probe is that reached by the portions of mass furthest from the heat generator.

Finally, the ventilation means advantageously permit ventilation of the entire mass in the recipient, avoiding the possibility that any portions of its internal space are not continuously supplied with a flow of moving air.

Obviously, to satisfy contingent and specific requirements a person skilled in the art could make further modifications to the system according to the present invention.

For example, in an alternative embodiment, the mixing means are pneumatic, for example comprising nozzles from which air is expelled, allowing the mass to be mixed.

In another variant, the mixing means are hydraulic.

In other words, the mixing means have at least one nozzle for liquid expulsion within the recipient.

In another embodiment, said nozzle is at least partially submerged in the recipient's contents.

The nozzle is connected to the actuating means, for example a pump, able to force the liquid to exit through the nozzle.

In a further embodiment, said actuating means take the liquid to be forced through the nozzle from the recipient itself.

In other words, the mixing means comprise a recirculating system such that the liquid present in the recipient itself is used to mix its contents.

These embodiments are also to be considered within the scope of protection as defined in the following claims.

## Claims

1. System for the execution of a decomposition process for organic substances, such as waste of animal origin, animal carcasses, vegetable and similar substances, comprising:
- a recipient (1) to contain said organic substances;
- means to initiate and maintain the decomposition process, adapted to bring these organic substances to a state suitable for initiation and maintenance of the decomposition process;
said system being **characterised by** the fact it further comprises means (22 24) to mix the organic substances in order to facilitate the decomposition process.

2. System according to claim 1, in which these initiation and maintenance means comprise a reaction mass.

3. System according to claim 2, in which the reaction mass comprises a pre-determined quantity of enzymes.

4. System according to claim 2 or 3, in which the reaction mass comprises a pre-determined quantity of bacteria.

5. System according to claim 4, in which the reaction mass comprises a pre-determined quantity of a support culture for these bacteria.

6. System according to any of the previous claims, in which these initiation and maintenance means comprise a heat generator (14).

7. System according to claim 6, in which this heat generator comprises an electrical resistor.

8. System according to claim 6 or 7, in which the initiation and maintenance means include a thermostat operatively connected to at least one measurement probe (16).

9. System according to claim 8, in which said initiation and maintenance means include a control box operatively connected to the heat generator (14) and thermostat.

10. System according to claim 8 or 9, in which said heat generator (14) and measurement probe (16) are positioned opposite each other along the horizontal axis (X-X) of the recipient (1).

11. System according to any of the previous claims, in which the mixing means comprise a mechanical mixer.

12. System according to claim 11, in which this mixing means include a shaft (22) rotatable around a rotation axis (Y-Y).

13. System according to claim 12, in which this shaft is connectable to a number of blades (24) distributed along the rotation axis (Y-Y) of the shaft (22).

14. System according to any of the previous claims, in which the mixing means include a motor (26).

15. System according to any of the claims from 6 to 14, in which the mixing means are connected to the heat generator in order to correlate their activation and/or deactivation.

16. System according to claim 15, in which the mixing means are connected to the heat generator in order to achieve their simultaneous activation and/or deactivation.

17. System according to any the claims from 1 to 10, in which the mixing means include hydraulic mixing means.

18. System according to claim 17, in which said hydraulic mixing means include at least one nozzle for liquid expulsion, placed inside the recipient.

19. System according to claim 18, in which said mixing means include a hydraulic pump connected to said nozzle.

20. System according to claim 19, in which said pump is operatively connected to the heat generator in order to achieve a correlated activation of said pump with said heat generator.

21. System according to any of the previous claims, further comprising means to ventilate the recipient (1).

22. System according to claim 21, in which said ventilation means include at least one outlet duct (20) for the vapours produced in the recipient (1).

23. System according to claim 21 or 22, in which said ventilation means include at least one atmospheric air inlet duct (18).

24. System according to claim 23, in which said outlet (20) and inlet (23) ducts are placed along a ventilation axis (V-V), sloped with respect to the horizontal axis (X-X) of the recipient (1).

25. Method for decomposition of organic substances comprising the following phases:
- introducing the organic substances into a recipient;
- introducing a quantity of water and a reaction mass comprising bacteria, a culture for the bacteria and enzymes into the recipient;
- generating heat applied to a mass including the organic substances, the reaction mass and water;
- mixing the organic substances with the reaction mass and water.

26. Method according to the previous claim, including a further phase of correlating the heat generation phase with the phase for activation of the mixing means.

27. Method according to claim 26, in which said correlation phase provides for generating heat simultaneously with the activation of the mixing means.

28. Method according to any the claims from 25 to 27, also including a phase of substantial transforming said mass into water vapour.

29. Method according to claim 28, including a further phase of venting vapours to atmosphere.
